# EUROPÄISCHE PATENTSCHRIFT

(11) **EP 0 801 036 B1**
(45) Veröffentlichungstag und Bekanntmachung des Hinweises auf die Patenterteilung: **06.10.2004**
(21) Anmeldenummer: 97105525.6
(22) Anmeldetag: 03.04.1997
(51) Int. Cl.: C03B 9/16, C03B 9/40, C03B 7/16, C03B 9/41, G05B 19/04, G05B 19/07

(54) **Verfahren zur Steuerung der Vorformen einer mehrere nebeneinander angeordnete Stationen aufweisenden Glasmaschine**
Method for controlling the blank molds of a glass-machine with several like sections next to each other
Procédé de commande des moules ébaucheurs d'une machine de fabrication de verre ayant plusieurs sections l'une côté de l'autre

(30) Priorität: 10.04.1996 DE 19614229
(43) Veröffentlichungstag der Anmeldung: 15.10.1997
(73) Patentinhaber: GPS GLASPRODUKTIONS-SERVICE GMBH, 45329 Essen (DE)
(72) Erfinder: Blaskowitz, Wolfgang, 45891 Gelsenkirchen (DE); Emrath, Norbert, 45721 Haltern (DE)
(74) Vertreter: Lelgemann, Karl-Heinz, Dipl.-Ing.

(56) Entgegenhaltungen:
- EP-A- 0 100 239
- EP-A- 0 180 394
- DE-C- 3 232 733
- US-A- 1 911 119
- US-A- 3 762 907
- US-A- 4 007 028
- US-A- 4 459 146

## Beschreibung

Die Erfindung bezieht sich auf ein Verfahren zur Steuerung der Vorformen einer mehrere nebeneinander angeordnete Stationen aufweisenden Glasmaschine.

Von einem einer den Glastropfen vom Glasstrang abtrennenden Schneideeinrichtung nachgeordneten Verteiler geraten die Glastropfen in einzelne Rinnen, wobei jede Rinne zu der Vorform einer Station der Glasmaschine führt. Da die Entfernung zwischen dem Verteiler und den unterschiedlichen Stationen der Glasmaschine unterschiedlich groß ist, sind entsprechend die den Verteiler an die Vorformen der Stationen anschließenden Rinnen unterschiedlich lang, mit der Folge, daß die Tropfenfallzeit mit zunehmender Entfernung der Station vom Verteiler ansteigt. Hieraus ergeben sich zeitliche Probleme bei der Steuerung der Vorformen der Stationen der Glasmaschine.

Sofern die Stationen, wie bei heute gebräuchlichen Glasmaschinen üblich, nebeneinander angeordnet und der Tropfenverteiler genau mittig vorgesehen ist, ergibt sich eine umso längere Tropfenfallzeit, je weiter außen die betreffende Station angeordnet ist. Der Beginn des an der Vorform stattfindenden Verarbeitungsprozesses muß daher entsprechend verzögert werden.

Der gesamte Verarbeitungsprozeß besteht aus 3600 Incrementen. Ein Increment entspricht einem 1/10 Grad eines Vollkreises. Bei den heute üblichen Verfahren zur Steuerung der Vorformen einer mehrere nebeneinander angeordnete Stationen aufweisenden Glasmaschine wird die erforderliche Verzögerung des Beginns des Verarbeitungsprozesses dadurch erreicht, daß Incremente eingefügt werden, so daß die betreffende Station beispielsweise um 50 Incremente später mit dem Verarbeitungsprozeß beginnt.

Im Gegensatz zu der Tropfenfallzeit bzw. zu den sich aufgrund der unterschiedlichen Tropfenfallzeiten ergebenden Zeitversätze der außerhalb der Mitte angeordneten Stationen, bei denen es sich um von der Schnittzahl der Glasmaschine unabhängige Größen handelt, sind die 3600 Incremente, über die sich ein gesamter Verarbeitungsprozeß erstreckt, abhängig von der Schnittzahl der Glasmaschine. Bei einem Verfahren zum Steuern der Vorformen einer mehrere nebeneinander angeordnete Stationen aufweisenden Glasmaschine werden daher schnittzahlunabhängige Komponenten in Form der Zeitversätze der einzelnen Stationen der Glasmaschine unter Einbeziehung schnittzahlabhängiger Komponenten, nämlich dem sog. Stationswinkel, kompensiert.

Der Zeitpunkt, zu dem der Verarbeitungsprozeß einer Station beginnt, ergibt sich aus einer Addition des Basiswinkels der Station und des Stationswinkels der Station. Bei dem Basiswinkel handelt es sich um den Versatzwinkel zwischen den einzelnen Stationen. Bei dem Stationswinkel handelt es sich um eine Aufaddierung auf den Basiswinkel, die deshalb durchgeführt wird, um den bereits mehrfach erwähnten Zeitversatz der einzelnen Stationen, je nachdem, wie weit sie von der mittigen Station bzw. den mittigen Stationen entfernt sind, wegzukompensieren.

Durch die Tatsache, daß die Dauer eines Incrementes von der Verarbeitungsgeschwindigkeit bzw. der Schnittzahl der Glasmaschine abhängig ist, die Tropfenfallzeit für jede Station jedoch auch bei unterschiedlichen Schnittzahlen konstant bleibt, entsteht die Problematik, daß der Stationswinkel immer an die Schnittzahl angepaßt werden muß.

Der Erfindung liegt die Aufgabe zugrunde, das ein Verfahren zur Steuerung der Vorformen einer mehrere nebeneinander angeordnete Stationen aufweisenden Glasmaschine derart weiterzubilden, daß zum einen die Einstellung auf unterschiedliche Schnittzahlen der Glasmaschine vereinfacht ist und zum anderen eine genauere Anpassung des Verfahrensablaufs an den Vorformen an eine neue Schnittzahl der Glasmaschine erfolgen kann.

Diese Aufgabe wird erfindungsgemäß durch ein Verfahren mit der Merkmaler des des Patentanspruchs 1 gelöst. Bei dem erfindungsgemäß ausgestalteten Verfahren wird der Stationswinkel demgemäß nicht durch Incremente, sondern durch eine Zeit bzw. einen Zeitraum definiert. Dieser Zeitraum entspricht genau den Tropfenfallzeiten und ist schnittzahlunabhängig, da sich mit zunehmender Schnittzahl der Glasmaschine weder die Tropfenfallzeiten noch die Unterschiede zwischen den einzelnen Tropfenfallzeiten ändern. Eine Neueinstellung bzw. ein Nachstellen des Stationswinkels ist daher bei dem erfindungsgemäßen Verfahren nicht mehr erforderlich. Erfindungsgemäß werden somit schnittzahlunabhängige Komponenten durch in gleicher Weise schnittzahlunabhängige Komponenten, nämlich den sog. Stationsoffset der einzelnen Stationen der Glasmaschine, kompensiert. Es wird somit unterschieden zwischen Verfahrensschritten, deren Zeitdauer von der Schnittzahl der Glasmaschine abhängig ist, und der Tropfenfallzeit, welche zwar den Ablauf des Verarbeitungsprozesses beeinflußt, welche jedoch nicht von der Schnittzahl der Glasmaschine abhängig ist.

In der EP 0 180 394 A1 wird ein Verfahren zur Steuerung einer Glasmaschine beschrieben, bei der u.a. die Anzahl der in Betrieb befindlichen Stationen der Glasmaschine kapazitiv an den Betrieb eines Ofens angepaßt werden kann, mittels dem das zur Verarbeitung anstehende flüssige Glas auf der gewünschten Temperatur gehalten wird, wobei auch die Menge des in einer Wanne od.dgl. sich befindenden flüssigen Glases bei der Steuerung der nachgeschalteten Glasmaschine eine Rolle spielen soll. Hierbei wird das elektronische Steuersystem so programmiert, daß diejenigen Stationen, denen Tropfen zugeführt werden und bei denen es sich nicht um sämtliche Stationen der Glasmaschine handeln muß, mit der erforderlichen Geschwindigkeit arbeiten, wobei darüber hinaus die gegenseitigen zeitlichen Verhältnisse der unterschiedlichen Stationen zueinander und der Einzelglieder jeder Station eingehalten werden sollen. Zwischen schnittzahlabhängigen und von der Schnittzahl unabhängigen zeitlichen Größen wird hierbei nicht unterschieden.

Eine weitere Vereinfachung des erfindungsgemäßen Verfahrens ergibt sich, wenn die Tropfenfallzeit zu der mittleren Station bzw. den mittleren Stationen der Glasmaschine gleich Null gesetzt wird und der Zeitversatz jeder weiteren Station der Glasmaschine die Differenz zwischen der Tropfenfallzeit zu der weiteren Station und der Tropfenfallzeit zu der mittleren Station bzw. den mittleren Stationen ist.

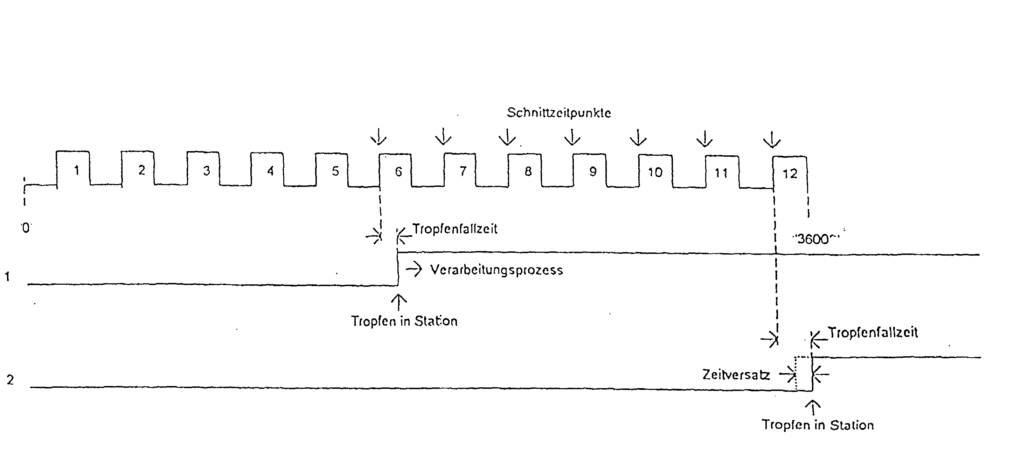

Im folgenden wird die Erfindung an Hand eines Ausführungsbeispiels unter Bezugnahme auf die Zeichnung näher erläutert, in der die für das erfindungsgemäße Verfahren wesentlichen Parameter dargestellt sind.

Oberhalb der in den Figuren dargestellten Kurven 1 und 2 sind die zwölf Stationen einer Glasmaschine hinsichtlich der ihnen zugeordneten Schnittzeitpunkte dargestellt, wobei die entsprechenden Zeitpunkte für die sechste bis zwölfte Station durch Pfeile angezeigt sind. Da es sich bei der vorliegenden Glasmaschine um eine solche mit zwölf Stationen handelt, sind die sechste und die siebte Station die mittleren Stationen dieser Glasmaschine.

Die Kurve 1 zeigt die zeitlichen Relationen bei der Beschikkung der innenliegenden sechsten Station der Glasmaschine mit einem Glastropfen. Zwischen der Schnittzeit des Glastropfens und seiner Ankunft an der Vorform der sechsten Station läuft die Tropfenfallzeit ab. Nach dem Ende der Tropfenfallzeit beginnt der eigentliche Verarbeitungsprozeß in der Vorform der Station, da erst dann der Glastropfen in der Station angelangt ist.

Die Tropfenfallzeit ist bei der sechsten und der siebten Station, bei denen es sich um die mittleren Stationen der Glasmaschine handelt, am kürzesten; für das erfindungsgemäße Verfahren zur Steuerung der Vorformen der die dargestellten zwölf Stationen aufweisenden Glasmaschine kann somit die Tropfenfallzeit der mittleren, d.h. der sechsten und der siebten Station, als nicht existent angenommen werden.

Aus der Kurve 2 ergibt sich, daß die Tropfenfallzeit relativ zu der gleich Null gesetzten Tropfenfallzeit bei der sechsten Station umso länger wird, je weiter die Station außen liegt. Dieser Zeitversatz ist an Hand der Kurve 2 für die zwölfte Station dargestellt. Um den so sich ergebenden Zeitversatz muß der Beginn des Verarbeitungsprozesses an der zwölften Station verzögert werden.

Der gesamte Verarbeitungsprozeß besteht aus 3600 Incrementen (1/10 Graden). Beim Stand der Technik besteht nur die Möglichkeit, die geförderte Verzögerung des Beginns des Verarbeitungsprozesses an den äußeren Stationen durch Einfügen von Incrementen zu erreichen, so daß die entsprechende Station beispielsweise 50 Incremente später mit dem Verarbeitungsprozeß beginnt. Aufgrund der Tatsache, daß die Dauer eines Incrementes von der Verarbeitungsgeschwindigkeit bzw. Schnittzahl der Glasmaschine abhängig ist, die Tropfenfallzeiten und damit die Zeitversätze bzw. die Differenzen zwischen den Tropfenfallzeiten jedoch konstant bleiben, ergibt sich das Problem, daß bei jeder Änderung der Schnittzahl der Glasmaschine sich zur Kompensation der unterschiedlichen Tropfenfallzeiten der unterschiedlichen Stationen jeweils unterschiedliche Incrementanzahlen ergeben.

Im Gegensatz dazu wird bei dem erfindungsgemäßen Verfahren, welches man als Totzeitkompensation bezeichnen kann, der Stationswinkel, d.h. die Versetzung des Beginns der Bearbeitungszeit der entsprechenden Station, nicht durch Incremente, sondern durch eine Zeit, nämlich den Zeitversatz zwischen der Tropfenfallzeit der betreffenden Station und der Tropfenfallzeit der mittleren Station, definiert. Dieser Zeitversatz ist ebenso wie die Tropfenfallzeit unabhängig von der Schnittzahl bzw. der Verarbeitungsgeschwindigkeit der Glasmaschine. Ein Nachstellen des sog. Stationswinkels ist somit im Falle des erfindungsgemäßen Verfahrens nicht mehr erforderlich.

## Patentansprüche

1. Verfahren zur Steuerung der Vorformen einer mehrere nebeneinander angeordnete Stationen aufweisenden Glasmaschine, bei dem die Tropfenfallzeit von Glastropfen zwischen dem Schnitt vom Glasstrang und dem Eintreffen des abgeschnittenen Glastropfens an der ihn verarbeitenden Vorform von der Anordnung der diese Vorform aufweisenden Station in der Glasmaschine abhängig ist, bei dem ein von einer Schnittzahl der Glasmaschine zeitlich abhängiger Verarbeitungsprozeß der Glasmaschine in 3600 Inkremente aufgeteilt ist, und bei dem jeder Station der Glasmaschine ein ihrer Position in der Glasmaschine entsprechender von der Schnittzahl unabhängiger Zeitversatz zugeordnet wird, um den der Beginn des Verarbeitungsprozesses an der Vorform der betreffenden Station verzögert wird.

2. Verfahren nach Anspruch 1, bei dem die Tropfenfallzeit zu der mittleren Station bzw. den mittleren Stationen der Glasmaschine gleich Null gesetzt wird und der Zeitversatz jeder weiteren Station der Glasmaschine die Differenz zwischen der Tropfenfallzeit zu der weiteren Station und der Tropfenfallzeit zu der mittleren Station bzw. den mittleren Stationen ist.

## Claims

1. Method for controlling the blank moulds of a glass-forming machine comprising a plurality of stations arranged one beside another, in which method the gob falling time of glass gobs between cutting from the glass strip and arrival of the severed glass gob at the blank mould processing it is dependent on the arrangement in the glass-forming machine of the station having that blank mould, in which a processing process of the glass-forming machine that is time-dependent on a cutting number of the glass-forming machine is divided into 3600 increments, and in which each station of the glass-forming machine is assigned a time delay which corresponds to its position in the glass-forming machine and is independent of the cutting number, by which time delay the start of the processing process at the blank mould of the relevant station is delayed.

2. Method according to claim 1, in which the gob falling time to the middle station or stations of the glass-forming machine is equated to zero and the time delay of each further station of the glass-forming machine is the difference between the gob falling time to the further station and the gob falling time to the middle station or stations.

## Revendications

1. Procédé de commande des préformes dans une machine de verrerie comportant plusieurs stations disposées les unes à côté des autres, dans lequel la durée de chute de gouttes de verre entre la séparation du barreau de verre et l'arrivée de la goutte de verre séparée dans la préforme assurant son façonnage dépend de la disposition de la station comportant ladite préforme dans la machine de verrerie, dans lequel un processus de façonnage de la machine de verrerie, qui dépend temporellement d'un nombre de coupes de la machine de verrerie, est divisé en 3600 incréments et dans lequel à chaque station de la machine de verrerie est associé un décalage temporel indépendant du nombre de coupes, qui correspond à sa position dans la machine de verrerie et de la valeur duquel le début du processus de façonnage dans la préforme de la station concernée est retardé.

2. Procédé selon la revendication 1, dans lequel la durée de chute de goutte jusqu'à la station médiane ou jusqu'aux stations médianes de la machine de verrerie est posée égale à zéro et le décalage temporel de chaque station supplémentaire de la machine de verrerie correspond à la différence entre la durée de chute de goutte jusqu'à la station supplémentaire et la durée dé chute jusqu'à la station médiane ou jusqu'aux stations médianes.
